# EUROPEAN PATENT APPLICATION

(11) **EP 1 249 957 A1**
(43) Date of publication of application: **16.10.2002**
(21) Application number: 00979043.7
(22) Date of filing: 01.12.2000
(51) Int. Cl.: H04L 1/00, H04B 7/26

(54) **COMMUNICATION TERMINAL AND METHOD OF WIRELESS COMMUNICATION**

(71) Applicant: MATSUSHITA ELECTRIC INDUSTRIAL CO., LTD., Kadoma-shi, Osaka 571-8501 (JP)
(72) Inventor: SHOJI, Takahiro, Yokohama-shi, Kanagawa 221-0005 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: JP0008507
(87) International publication number: WO02045325

(57) **Abstract**

The SIR of the pilot symbol is calculated in channel quality estimating section 105, then, it is compared to a predetermined set threshold value. When SIR is smaller than the threshold value, the receiving data processing is stopped in receiving data processing section 107 under the control of reception processing controlling section 106. Moreover, only the pilot symbol from transmitting data processing section 110 is transmitted under the control of transmission processing controlling section 108. Therefore, it is possible to determine precisely the reliability of the communication data in packet data communication and to save the power in the data retransmission processing.

## Description

### Technical Field

The present invention relates to a communication terminal apparatus and radio communication method which are used for packet data communication.

### Background Art

In radio data transmission, there is a problem of channel quality deterioration due to fading, shadowing, etc. in the radio propagation path and hence, accompanying deterioration of the reliability of the transmission data.

Although the delay is permitted when comparing packet data communication with speech data communication, but the errorless (Error Free) of communication data must be guaranteed.

The reliability of data deteriorates with the deterioration of channel quality, and when the data transmitted from a communication partner cannot be recovered even by error correction decoding processing, then, retransmission by ARQ becomes necessary in packet data communication.

Consequently, from the spreading of a radio communication apparatuses such as cellular phone, etc. and the necessity of a large capacity of data communication due to multimedia, the efficient frequency reuse and the measure of long-life battery in a packet data terminal are required.

When the retransmission of data becomes necessary, the power consumption which is required to perform communication of a communication data before such a retransmission becomes useless. Moreover, in the viewpoint of efficient use of frequency resources of the radio communication, it is required to aim at an achievement of data retransmission processing.

An information processing apparatus comprising a radio communication function is disclosed in the Japanese Patent Application No. H9-163452, in which electric field strength is detected, and when the detected electric field strength does not satisfy a predetermined value, the radio communication function is set to an OFF state, hence, reducing the power consumption.

However, in multiple access methods presently used in the packet data communication, the electric field strength is not always the most suitable measuring standard to estimate the channel quality of each individual user and reliability of communication data.

### Disclosure of Invention

It is an object of the present invention to provide a communication terminal apparatus and a radio communication method that are capable to save power in data processing of a packet data insufficiently estimated, and to determine precisely the reliability of received data in packet data communication.

Such an object can be achieved by measuring SIR (Signal Interference Ratio), etc. of pilot symbol, estimating whether the received data includes an error, holding the transmission/reception data processing when it was estimated that there is an error in the received data, and carrying out transmission/reception of only control signal.

### Brief Description of Drawings

FIG. 1 is a block diagram showing a configuration of a communication terminal apparatus according to the embodiment of the present invention, and
FIG. 2 is a flowchart showing an operational processing of a communication terminal apparatus according to the embodiment of the present invention.

### Best Mode for Carrying out the Invention

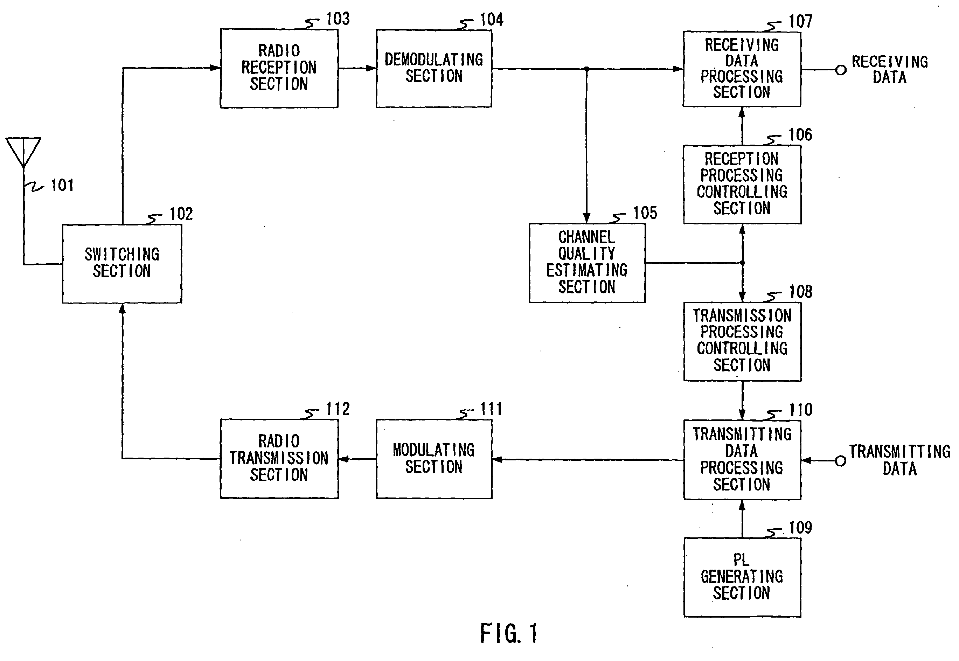

The embodiment of the present invention will hereinafter be specifically described with reference to the accompanying drawings. FIG. 1 is a block diagram showing a configuration of a communication terminal apparatus according to the embodiment of the present invention. The SIR of a pilot symbol (PL) that is used for estimating the receiving data quality is considered here as an example.

In the communication terminal apparatus of FIG. 1, switching section 102 is used here because the same antenna is utilized for transmission and reception, a radio signal received from antenna 101 is outputted to radio reception section 103 whereas a transmission signal outputted from radio transmission section 112 is outputted to antenna 101.

Radio reception section 103 amplifies the received signal inputted from switching signal 102, carries out frequency conversion of the amplified signal into intermediate frequency or baseband frequency and output the frequency converted signal to demodulating section 104.

Demodulating section 104 demodulates the signal outputted from radio reception section 103 and outputs the demodulated signal to channel quality estimating section 105 and receiving data processing section 107.

Channel quality estimating section 105 calculates SIR of a pilot symbol which is known to both transmission side and reception side. In addition, channel quality estimating section 105 compares the calculated SIR with threshold value set beforehand, and outputs a signal that shows the comparison result to reception processing controlling section 106 and transmission processing controlling section 108. Moreover, the data quality of user data allocated near pilot symbol which is obtained from SIR value of the pilot symbol can be estimated.

Reception processing controlling section 106 notifies receiving data processing section 107 to execute receiving data processing when SIR is larger than the threshold value while when SIR is smaller than the threshold value, it notifies receiving data processing section 107 to stop receiving data processing.

Receiving data processing section 107 extracts the received data by separating control signal from a demodulated signal and performing decoding processing, when there is a notification from reception processing controlling section 106 to execute receiving data processing. Moreover, error correction decoding processing such as Viterbi decoding, turbo decoding, deinterleaving and CRC detection or demodulation processing, etc. can be included as a receiving data processing carried out by receiving data processing section 107.

Transmission processing controlling section 108 notifies transmitting data processing section 110 to execute transmitting data processing when SIR is larger than the threshold value while when SIR is smaller than the threshold value, it notifies transmitting data processing section 110 to stop transmitting data processing.

PL generating section 109 generates a pilot symbol and outputs it to transmitting data processing section 110.

Transmitting data processing section 110 multiplexes the pilot symbol in a radio frame after performing on the transmitting data the transmitting data processing such as information source encoding, encryption and channel coding, etc., when there is a notification from transmission processing controlling section 108 to execute a transmitting data processing, and outputs the result to modulating section 111. In addition, error correction coding processing such as convolutional coding, interleaving, CRC check bit insertion and TPC insertion or modulating processing, etc., can be included as a transmitting data processing carried out by transmitting data processing section 110.

Moreover, transmitting data processing section 110 outputs to modulating section 111 only the control signal which includes a pilot symbol without performing transmitting data processing when there is notification from transmission processing controlling section 108 to stop transmitting data processing.

Modulating section 111 performs modulation processing on the signal outputted from transmitting data processing section 110, and output the modulated signal to radio transmission section 112. Radio transmission section 112 performs the processing of frequency conversion, amplification, etc. on the signal outputted from modulating section 111, and transmits the resultant signal as a radio signal from antenna 101 via switching section 102.

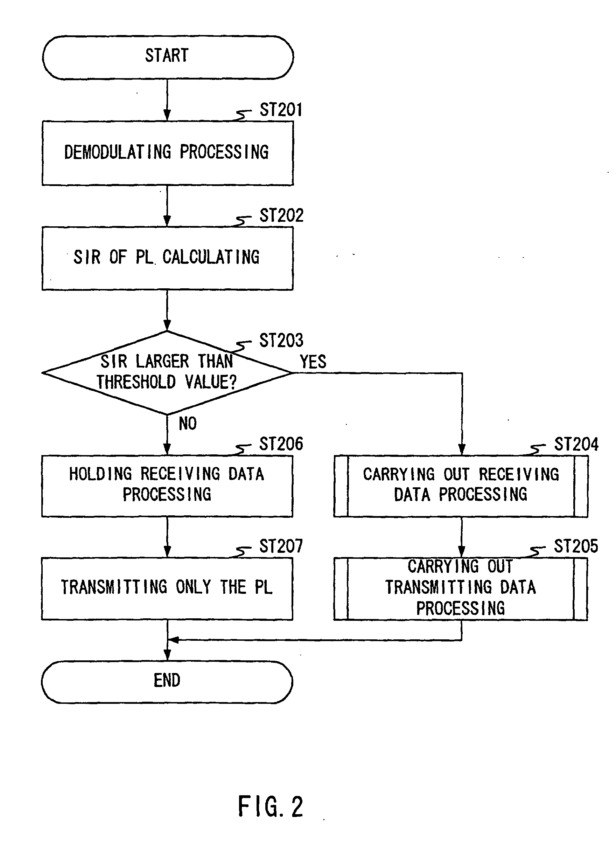

Hereafter, operational processing of the communication terminal apparatus which has the aforementioned configuration will be explained while using the flowchart shown in FIG. 2.

In ST201, the signal received from antenna 101 through switching section 102 and radio reception section 103 is demodulated in demodulating section 104.

From ST202 to ST203, the SIR is calculated using the pilot symbol included in the demodulated signal by channel quality estimating section 105, and the calculated SIR is compared with a threshold value set beforehand.

Referring to the comparison result of ST203, if SIR is larger than the threshold value, receiving data processing section 107 receives a notification from reception processing controlling section 106 to perform receiving data processing in ST204 and extracts the received data by performing decoding processing after separating the control signal from the demodulated signal.

In ST205, transmitting data processing section 110 multiplexes the pilot symbol outputted from PL generating section 109 in the radio frame format after performing on the transmitting data the transmitting data processing such as information source encoding, encryption and channel coding, etc., when there is a notification from transmitting processing controlling section 108 to execute a transmitting data processing, and outputs the result to modulating section 111. The transmission signal outputted from transmitting data processing section 110 is modulated in modulating section 111, frequency converted and amplified in radio transmission section 112 and transmitted as a radio signal from antenna 101 via switching section 102.

On the other hand, referring to the comparison result of ST203, if SIR is smaller than the threshold value, receiving data processing section 107 receives notification from reception processing controlling section 106 to stop receiving data processing in ST206.

In ST207, transmitting data processing section 110 outputs to modulating section 111 only the pilot symbol when there is notification from transmission processing controlling section 108 to stop transmitting data processing.

Accordingly, it is possible to determine precisely the reliability of the communication data in packet data communication by estimating the data quality based on SIR of the pilot symbol, and it is also possible to stop data processing of a receiving data and transmitting data which are insufficiently estimated.

Moreover, according to the present invention, it is possible to obtain the same effect by estimating the channel quality based on SIR of a pilot channel when the communication is performed using a pilot channel rather than a pilot symbol.

Further, in the aforementioned description, although the estimation of channel quality is performed based on SIR, but this invention is not limited to this and estimation of receiving data quality might be done based on TPC, delay profile, receiving power level of the desired signal, AGC, FEC, CRC, BER, etc.

In the aforementioned description, although the control of whether data processing would be carried out to both receiving data and transmitting data, this control may be carried out only to the receiving data.

The uplink channel and downlink channel can be considered to have the same channel quality in Time Division Duplex (TDD) in which the same radio propagation path for uplink channel and downlink channel is utilized. Therefore, the execution of controlling of the transmitting data based on channel estimating value has particular effect in TDD system.

According to communication terminal apparatus and radio communication method of the present invention, it is clear form the above description that the receiving data quality is estimated from the received packet previously, and since the transmission/reception data processing is stopped and only the control signal is transmitted/received when the estimated value of the obtained receiving data quality does not satisfy the set threshold, saving of the power in data processing which becomes useless can be obtained.

The present application is based on the Japanese Patent Application No. 11-156463 filed on June 3, 1999, and on the Japanese Patent Application No. 11-188680 filed on July 2, 1999. Entire contents of which are expressly incorporated by reference herein.

### Industrial applicability

The present invention is applicable to communication terminal apparatus of packet data communication.

## Claims

1. A communication terminal apparatus comprising:
data quality estimating section which estimates whether a received data extracted from a received packet includes an error;
Receiving data processing section which performs demodulating and decoding processing on the received packet only when errorless received data is estimated.

2. The communication terminal apparatus according to claim 1, wherein said data quality estimating section estimates that the received data includes no error when the estimating value of the received data quality from the received packet is larger than a predetermined set threshold value.

3. The communication terminal apparatus according to claim 1 further comprising a transmission data processing section which performs coding and modulation data processing on the transmission data only when errorless received data is estimated.

4. A radio communication method which performs demodulation and decoding processing on said received packet only when the estimated value of the received data quality from the received packet is larger than a predetermined set threshold.

5. The radio communication method according to claim 4 performs coding and modulation processing on transmitting data only when the estimating value of received data quality from the received packet is larger than a predetermined set threshold.
